# EUROPEAN PATENT APPLICATION

(11) **EP 4 809 971 A1**
(43) Date of publication of application: **23.09.2026**
(21) Application number: 25382268.8
(22) Date of filing: 20.03.2025
(51) Int. Cl.: A61C 7/10

(54) **DISTRACTION DEVICE FOR PALATAL EXPANSION**

(71) Applicant: Tech Xika P.T.T, S.L., 25005 Lleida (ES)
(72) Inventor: Carrero Villarroel, Xavier, 25005 LLeida (ES); Boscá Llopis, José Enrique, 25005 Lleida (ES)
(74) Representative: Carlos Hernando, Borja

(57) **Abstract**

The invention relates to a distraction device for palatal expansion, specifically for the expansion of the palatal suture, relates to a distraction device with an expanding element having different structural modifications with respect to distraction devices in the prior art. One modification comprises a structural configuration to increase expansion capacity with respect to known devices in the prior art, another modification introduces safety mechanisms that prevent the uncoupling of the components of the device during use, and another modification optimises the design, facilitating the assembly of the expansion device on a personalised sintered CAD/CAM structure, used to fix the device or expander to the patient's palate or teeth without the need to use welds.

## Description

### OBJECT OF THE INVENTION

The present invention, a distraction device for palatal expansion, specifically for the expansion of the palatal suture, relates to a distraction device with an expanding element having different structural modifications with respect to distraction devices in the prior art. One modification comprises a structural configuration to increase expansion capacity with respect to known devices in the prior art, another modification introduces safety mechanisms that prevent the uncoupling of the components of the device during use, and another modification optimises the design, facilitating the assembly of the expansion device on a personalised sintered CAD/CAM structure, used to fix the device or expander to the patient's palate or teeth without the need to use welds.

The field of application of the present invention is comprised within the orthodontics sector, focusing particularly on the area of manufacture of distraction devices designed for the expansion of the palate, specifically for the expansion of the palatal suture.

### BACKGROUND OF THE INVENTION

In the prior art, different devices are known for osteogenic distraction, a biological process of forming new bone between the surfaces of bone segments that are gradually separated by increasing traction. In the context of the present application, these distractors are recognised tools in orthodontics for the transversal widening of the jaw. These expander devices, known as palatal expanders, expanders, palatal expansion devices or palatal distraction devices, are generally fixed to the jaw and/or palate by means of a CAD/CAM structure through screws or microimplants, or to the teeth by means of dental anchors, using an expansion device to gradually separate the maxillary bones in the palatal suture.

The palatal expander, conventionally used for the expansion of the upper jaw in orthodontics, can also be adapted to other areas according to specific orthodontic and surgical treatment needs. Some of these applications include mandibular expansion; anchoring in the zygomatic region combined with expansion devices as an alternative for adult patients; or adaptation with deeper anchors for the application thereof in surgical procedures such as Surgically Assisted Rapid Palatal Expansion (SARPE).

Likewise, the use of palatal expanders is not limited to only orthodontics and dentofacial orthopaedics, but rather have also been investigated applications in hospital surgery, particularly in complex cases of craniofacial and orthognathic reconstruction, such as, for example, in surgeries for adult patients with fused maxillary sutures, where conventional expansion is not viable; in cases of cleft palate and maxillofacial surgery, in patients with cleft palate and cleft lip sequelae, where the expansion can help to correct maxillary collapse before surgical reconstruction; in treatments in patients with sleep apnoea, in which expanders can be part of a comprehensive treatment to improve airflow in cases of severe obstructive sleep apnoea; or in cases of maxillary hypoplasia secondary to previous trauma or surgy, where patients can benefit from the expansion to recover the transversal dimension of the maxilla.

An example of a palatal extension device is described in the application of patent European number EP3988049A1. The device described in said document has a design based on screws for securing to the palate separated from one another and connected by means of movable sleeves which are actuated by an expansion element that regulates the distance between screws, this actuation being performed by the user of the device without the need to see a professional. This device comprises fixing elements to ensure the stability of the device during treatment.

However, known devices with the mentioned configuration have some limitations, for example:
- Limited expanding capacity: In relation to the initial distance and the final expanding distance, the travel distance that the expanding equipment can actually reach, for example, in the device of the document mentioned above is limited and, therefore, when it is reached, it forces the removal of the expanding equipment so that it can be replaced with another larger one, with the subsequent troubles for the patient.
- Risk of uncoupling: The expanding elements of the expanding equipment can uncouple at the end of the travel distance, complicating treatment.
- Assemblies with welding: Devices usually require welding for the assembly of elements, for example, for fixing the ends of expanding rods with sleeves in which the implant screws are inserted or with sintered CAD/CAM structures, where said welds complicate replacing components during treatment.

The objective of the present invention is, therefore, a device that overcomes the mentioned limitations in the devices of the prior art by implementing solutions which achieve:
- An increase in the expanding capacity of the expanding element, or distraction device, without causing an increase in the size of the device as a whole, i.e., with the same initial size or length as an expanding device of the prior art, achieving a larger expanding capacity. For example, an expanding device of the prior art with an initial length of 10 mm would expand up to 14.5 mm whereas an expanding device according to the present invention with an initial length of 10 mm could expand up to at least 16 mm.
- An assurance of the safety of the treatment by means of mechanisms which prevent accidental uncoupling, or uncoupling due to coming off the end of the thread, of the expanding element. That is particularly important taking into account that the device is designed for the users themselves to activate the expanding device, thereby preventing visits to professionals' offices.
- An easier replacement of components with another component having a larger expansion range, as there is no weld between the expanding element and the fixing sleeves of the implant screws or the sintered CAD/CAM structure.
- A reduced size of the device to make it less invasive and more comfortable for the patient.

The CAD/CAM structure for the expander or expanding device of the invention refers to a personalised sintered component which is used to position the expander in the palate. This can be done by means of fixing same to the expanding device and to microimplants and/or by means of fixing same to the expanding device and to dental anchors, such that through the CAD/CAM structure, which is particular for each patient, the expanding device is properly positioned on the palate, the teeth, or both palate and teeth.

The present invention therefore relates to a palatal distraction device of the type having an expansion device with two elements which are displaced with respect to one another, with one element being inserted into the other element in the less expanded state thereof, and incorporating different modifications to overcome the limitations of distraction devices in the prior art.

### DESCRIPTION OF THE INVENTION

The present invention, a distraction device for palatal expansion, has as its object a distraction device according to claim 1.

Namely, the invention relates to a device with a central expanding element having an adjustable length comprising:
- a nut with opposite sides, comprising a first side with an opening with a first inner thread and a second side, opposite the first side, with an opening with a second inner thread having a smaller diameter than the first inner thread,
- a first threaded rod with a thread with a first diameter and a cavity having a smaller diameter than said first diameter, and an external end on one of the sides, with the thread being screwed onto the first inner thread of the nut, and
- a second threaded rod with a thread with a second diameter, and an external end, with the thread being screwed onto the second inner thread of the nut, and the diameter of the thread being smaller than the diameter of the cavity of the first rod for insertion into said cavity,
determining at least two positions, a non-expanded initial position, wherein the external end of the second threaded rod is in contact with the nut and inserted into the cavity of the first threaded rod, determining a minimum length (A) between the two external ends of the device, and an expanded final position, wherein the external end of the second threaded rod is separated from the nut and outside the cavity of the first threaded rod, determining a maximum length (B) between said two external ends.

That is, the invention proposes, as stated above, a distraction device of those intended for the palatal expansion of the palatal suture in the jaw, made up of a structure comprising a central expanding element having an adjustable length associated on both sides with respective securing means for the fixing thereof to the jaw by means of implant screws and/or coupling means for the fixing thereof to the teeth, being able to vary the distance between the securing means and/or of coupling means of each side by means of adjusting the length of the central expanding element. The present invention is essentially distinguished in that said expanding element has a structural configuration which increases its expansion capacity with respect to solutions of the prior art, namely, around a 30% higher expansion capacity with respect to said known solutions. Likewise, a distraction device can incorporate safety mechanisms to prevent uncoupling of the elements during treatment and also to optimise the design to facilitate assembly on the securing means and/or coupling means.

The expanding element comprises three essential components: a central nut and two threaded rods having different diameters, designed to generate a linear expansion movement in response to the rotational action of the nut. The central nut has two internal threads having different diameters, at the ends or opposite sides thereof, in which the respective threaded rods are screwed or threaded. The first threaded rod, having a larger diameter than the second rod, incorporates an axial housing cavity which allows the partial insertion of the second threaded rod inside same, optimising the compactability of the device in an initial position.

The expanding element operates by means of the actuation of the nut, preferably with its surface outer with a hexagonal section, which, upon rotation, causes the relative displacement of the rods in opposite directions, progressively increasing the distance between the outer ends thereof. Said expansion movement is utilised to generate a controlled separation force, suitable for applications requiring an expansive adjustment, such as the opening up of structures or the activation of fixing systems.

This design provides an efficient and compact solution for expansion mechanisms, minimising the volume in its initial configuration and maximising the expansive travel distance with a single actuation element. In a particular solution of the present invention, said expanding element is provided with a structural configuration, which provides it with an expanding capacity between the ends of the threaded rods that is greater than what other currently known similar systems allow, namely by means of different thread pitches in each threaded rod and, logically, in the corresponding inner threads of the nut, which allows the generation of an expanding capacity of up to around 30% greater than with two rods having the same thread pitch. The main reason for said increase in the expanding capacity resides in the combination of the dimensions of the length of the threaded rods together with the difference in forward movement per turn that each thread of each rod has depending on the pitch thereof.

The thread pitch determines the distance that a treaded rod moves forward per complete turn of the nut. In this mechanism, the two threaded rods have opposite threads, one having a right-hand thread and the other one having a left-hand thread, which causes, when the central nut rotates, both rods to be displaced in opposite directions. When the nut rotates in one direction, the rods separate from one another (expansion), and when it rotates in the opposite direction, they move closer together (contraction). Given that the two rods have different thread pitches, the threaded rod with the larger pitch moves forward more rapidly than the threaded rod with the smaller pitch, generating a differential displacement. The total expansion or contraction distance generated by each rotation of the nut is equal to the sum of pitches of both threads.

Therefore, a first solution of the device object of the invention comprises a first rod and a second rod with different thread pitches, said thread pitches being associated with the first inner thread and the second inner thread of the nut, respectively, which also have different thread pitches. Preferably, the first rod having a larger diameter than the second rod has a thread with a thread pitch smaller than the thread of the second rod.

Another solution object of the invention, which is an alternative or complementary to the previous solution, is an expanding device comprising end of travel distance warning and active safety means for blocking expansion when the threaded rods reach the end of their travel distance in the inner of the nut, thereby preventing the rods from uncoupling from the nut. To that end, mechanical blocking means preventing the threaded rods from being able to come out of the nut when they reach the end of travel distance of the thread are included. Said mechanical blocking means are arranged at least at the threaded end of the second rod to prevent said end of the rod from coming out of the nut, thereby blocking the expansion of the device when it reaches the fully extended final position and preventing unwanted uncoupling of the rods.

As a first mechanical blocking means alternative, a blocking element is arranged at the inner end of the second threaded rod, opposite the outer end thereof, such that when the second rod reaches the end of the travel distance in the second inner thread of the nut, said blocking element functions as a stop at the edge of the inner thread, preventing the second rod from becoming uncoupled. This blocking element is preferably a rivet and/or a screw and/or a welded portion arranged at said inner end of the second threaded rod.

As a second mechanical blocking means alternative, a threadless smooth section is arranged on each of the two rods such that when they reach the end of their travel distance on the respective inner threads of the nut, said smooth section allows them to rotate without uncoupling.

Another solution of the present invention, which is also an alternative or complementary to any of the previous solutions, is the configuration of the outer ends of both threaded rods which does not have a cylindrical geometry, but rather a non-cylindrical geometry with an opening threaded to receive securing means and/or coupling means for securing and/or coupling the device. Preferably, the geometry of the outer ends will be square, and it can also be hexagonal, triangular, or trilobed, among other options. This configuration of the outer ends of the device allows the easy assembly and separation or removal of the distraction device from the securing means for securing the device to the palate and/or coupling means for coupling the device to the teeth, both means being grouped in a personalised CAD/CAM structure, preferably formed by sintering and from which the securing means and the anchorage means derive. Therefore, the personalised CAD/CAM structure brings together the securing means and anchorage means, which can be hybrid means using a guide anchor with microimplants, dental skeletal anchor, or a combination, which makes it highly effective for a controlled and safe maxillary expansion. However, it must also be taken into account that a CAD/CAM structure can be used individually with a single type of securing depending on the patient's clinical need, i.e., securing means with microimplants for securing the expander to the palate. Alternatively, as previously indicated, it is possible for the CAD/CAM structure to incorporate the securing means with microimplants on the palate and at the same time a dental anchor, for support the CAD/CAM structure on some teeth. The election of the securing means depends on factors such as age, bone quality, and treatment objectives. For the purposes of the present description, the personalised and typically sintered securing and anchorage means grouped in a CAD/CAM structure are associated with temporary securing means arranged on the patient's palate and coupling means for coupling the expanding device to the patient's teeth or dental anchor.

In the prior art, these securing means and/or coupling means are integrally attached to one another, for example, forming a welded whole, having complex actuation mechanisms and manufacture so that the expanding device can be separated from said securing means and/or coupling means, complicating the separation of the expanding device from same. However, in the present invention, the sintered CAD/CAM structure (with securing means, or with securing means and anchorage means) is connected with the ends of the expander by means of screws, thereby allowing the replacement of the expander when a first expander has reached its maximum extension and it is necessary to continue the expansion treatment, so the first expander is replaced with a second expander to the ends of which the CAD/CAM structure is coupled by means of the mentioned screws.

The configuration object of the present invention allows simple switching out, in a simple manner without the need to make or break welds, of the expanding devices with others having a larger range as the largest possible separation of the palate is gradually achieved with each device, whereas the CAD/CAM structure with the securing and anchorage means is maintained and coupled to the expanders when they are switched out. To achieve the separation of the palate, there is used a first expanding device of the palate which is placed suitably through securing means and/or coupling means, by means of a personalised CAD/CAM structure, associated with temporary anchorage devices, fixed to the palate, to achieve a first separation of the palate when the device reaches its maximum expansion determined by the maximum length between the external ends of the rods. The patient, and not a professional, will turn the nut of the device until said maximum length is reached. If a larger separation of the palate is required, the first expanding device will have to be replaced with a second expanding device with a larger minimum length between outer ends than the first expanding device used. This replacement of the expanding device in the palate is performed in a simpler manner as a result of the threaded openings arranged on the outer ends of the threaded rods. Therefore, the possibility of replacing the expanding device in the palate itself allows treatment personalisation precisely as a result of the simple replacement, such that, for example, at the final of the stage of a first expanding device, which reaches an expansion of 8 mm or maximum length between external ends thereof, treatment can be continued with a device having a larger size, for example, which allows an expansion of 12 mm or maximum length to be achieved between the external ends thereof.

Furthermore, the components of the device object of the invention are preferably manufactured with biocompatible materials such as titanium or biocompatible alloys.

### DESCRIPTION OF THE DRAWINGS

To complete the description of the present invention, and for the purpose of facilitating understanding of the features thereof, the following figures are included in the present specification for illustrative and non-limiting purposes.
Figure 1 shows a schematic view of an example of the distraction device as a whole, depicted in the position it adopts once it is incorporated in the patient's palate, prior to the insertion of Temporary Anchorage Devices (TAD).
Figure 2 shows a side elevational view of the expanding element comprised in the device of the invention, depicted independently, showing the general external configuration thereof.
Figure 3 shows a sectional view of the expanding element of Figure 2, according to section A-A marked in said figure, showing the internal configuration of all the parts thereof.

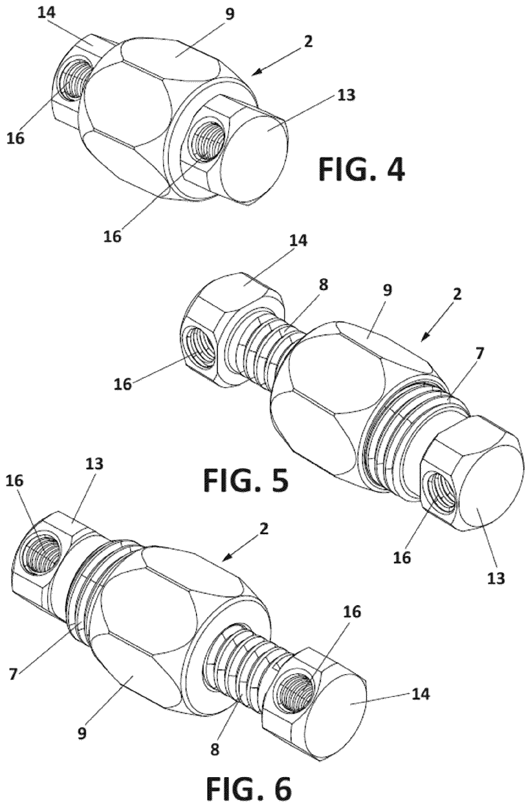

Figures 4 and 5 show respective perspective views of the expanding element shown in Figure 2, depicted respectively with the rods in the non-expanded initial position and in the expanded final position.
Figure 6 shows a perspective view of the expanding element shown in Figure 5, in this case taken from the opposite viewpoint.
Figures 7 and 8 show respective schematic sectional views, according to a longitudinal section, of the expanding element comprised in the device of the invention, depicted respectively with the rods in the non-expanded initial position and in the expanded final position, showing the difference in width between the ends of the rods.

### PREFERRED EMBODIMENT OF THE INVENTION

In view of the mentioned figures, different embodiments of the palatal expanding device or distraction device object of the invention are described below.

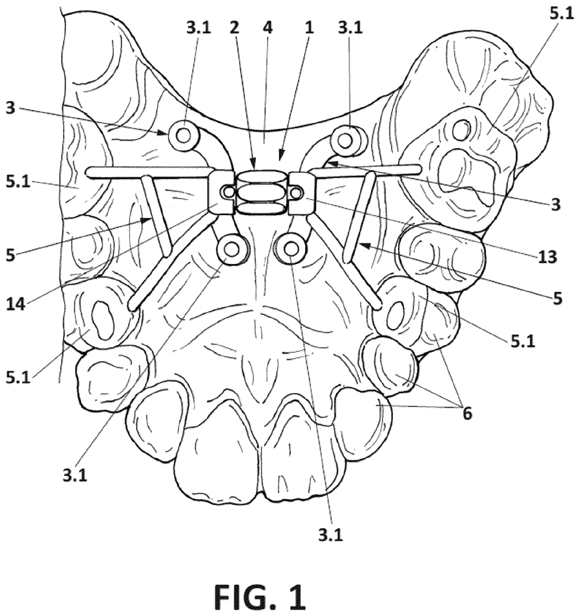

Therefore, as shown in Figure 1, the expanding or distraction device (1) of the invention essentially comprises a central expanding element (2) having an adjustable length associated on both sides with securing means (3) to fix the device (1) to the palate (4) by means of implant screws or Temporary Anchorage Devices (TAD) (not depicted), said securing means comprising, for example, two or four sleeves (3.1), without ruling out more, positioned on both sides of the expanding element (2), and/or coupling means (5) to fix the device (1) to the teeth (6), consisting, for example, of a structure with two or more grips (5.1) positioned on both sides of the expanding element (2). Said securing means (3) and anchorage means (5) are grouped in a personalised CAD/CAM structure for each specific case, and although said CAD/CAM structure must always include securing means (3) for securing the expander to the palate preferably through microimplants (3.1), they may also include anchorage means (3) for anchoring them to some teeth (5.1) as needed.

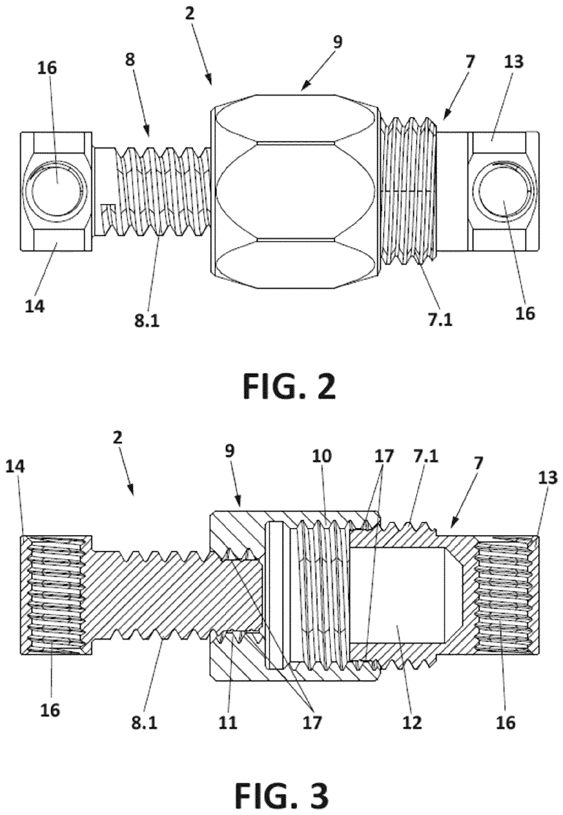

Furthermore, said expanding element (2), as seen in Figures 2 and 3, essentially comprises two threaded rods (7, 8), with a first rod (7) having a larger diameter than the second rod (8), which, inserted on opposite sides of a nut (9), are screwed or threaded, respectively, onto a first inner thread (10) having a larger diameter and onto a second inner thread (11) having a smaller diameter which said nut (9) is internally provided with. Likewise, the first rod (7) has a cavity (12) open at its proximal end into which the second rod (8) can be inserted at its proximal end, and wherein, in turn, the opposite and external ends (13, 14) of both rods (7, 8), positioned outside the nut (9), are provided so as to be attached to the previously mentioned securing means (3) and/or anchorage means to secure the extender device to the palate. This configuration allows the determination of at least two positions, a non-expanded initial position, in which the external end of the second threaded rod is in contact with the nut and inserted into the cavity of the first threaded rod (7), determining a minimum length (A) between the two external ends of the device, and an expanded final position, in which the external end of the second threaded rod is separated from the nut and outside the cavity of the first threaded rod (7), determining a maximum length (B) between said two external ends. Other intermediate positions between these two end positions are possible.

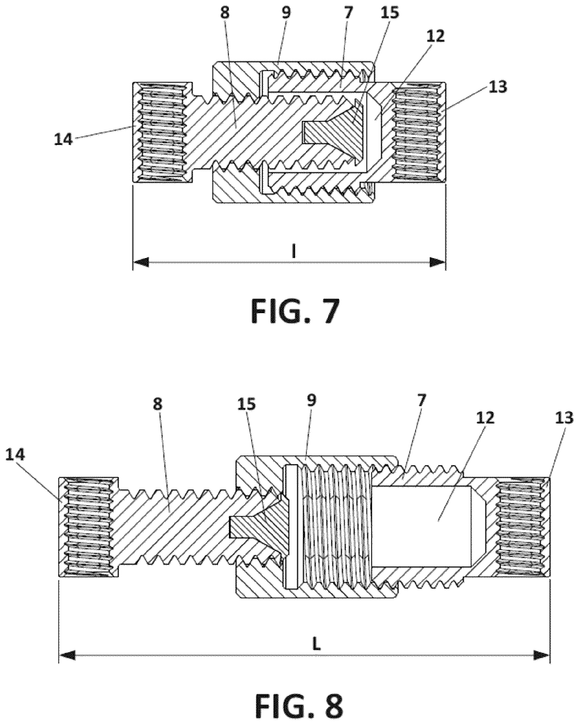

Based on said configuration, a first example of a device (1) of the invention is essentially distinguished in that the thread (7.1) of the first rod (7) and the thread (8.1) of the second rod (8) of the expanding element (2) have different thread pitches and, logically, in turn, the first inner thread (10) and the second inner thread (11) which the nut (9) is internally provided with also have different thread pitches according to the ratio of each rod, allowing an increase in the relative separation distance between the respective external ends (13, 14) of both threaded rods (7, 8) from a non-expanded initial position (Figure 7) to a fully expanded final position (Figure 8).

Preferably, the second rod (8) having a smaller diameter has a thread (8.1) with a larger thread pitch to achieve a larger mayor forward movement per rotation than the thread (7.1) of the second rod (7), which preferably has a standard thread pitch.

According to the above, the initial length (A) between the external ends (13, 14) of both threaded rods (7, 8) corresponds with the non-expanded situation of the expanding device (Figure 7) whereas the final length (B) between said ends (13, 14) corresponds with the fully expanded situation of the expanding device (Figure 8). The expanding capacity of the device is the difference between the final length (B) and the initial length (A), i.e., B minus A.

Minimum dimensions are possible for extreme cases in which the patient lacks space in the palate in which extending devices with initial lengths (A) of less than 8 mm could be arranged, however, the most typical values of minimum lengths (A), with the expanding device being compressed or contracted, are 8 mm, 10 mm, 12 mm, 14 mm, 16 mm, or greater.

In one example, expanding devices in which the thread pitches of the two threaded rods (7, 8) are 0.5 mm and 0.6 mm, and with the previous minimum lengths (A), would give rise, after expansion, to expanding devices with maximum lengths (B) after the expansion thereof of 16 mm, 17.90 mm, 23.75 mm, and 29.75 mm, respectively. This ratio corresponds with the following equation: $B = 2.95 ⋅ A - 13.5$

Wherein:
**A:** Initial length (in mm).
**B:** Final length **B** (in mm).
**Extending capacity = B-A**

Other examples of palatal expanders could be achieved with other thread pitches in the threaded rods (7, 8), as well as other desired maximum and minimum dimensions. Based on the preceding values, the extension capacity of each palatal extension device is obtained, such that the values range between 60.48% and 103%, with an increasing trend as A increases. An average of these values indicates that mean expansion capacity with respect to the initial length A is about 80%, which represents a greater extending capacity compared to other known solutions.

In another example of the present invention, the expanding element (2) comprises, in addition to or as an alternative to different thread pitches in the threaded rods (7, 8), mechanical blocking means functioning as safety means for blocking expansion of the device when it reaches the fully extended final position, prevented unwanted uncoupling of the rods (7, 8) with respect to the nut (9), since said blocking means prevent said rods (7, 8) from being able to come out of the nut (9) when they reach the end of travel distance of the thread.

To that end, in an embodiment option shown in Figure 9, said mechanical blocking means consist of the existence of a blocking element (15), defined by a screw, rivet, or welded portion positioned at the inner end, opposite the outer end (14), of the rod (8) having a smaller diameter such that when it reaches the end of its travel distance on the second inner thread (11) of the nut (9), said blocking element (15) functions as a stop at the edge of the thread (11), preventing it from becoming uncoupled. Namely, Figures 7 and 8 show the rivet (15) inserted and adhered at the inner end of the second threaded rod (8).

In another alternative embodiment option of blocking means, shown in Figure 3, the mechanical blocking means of the expanding element (2) consist of the existence of a threadless smooth section (17) provided at each inner end, opposite each outer end (13, 14) of each of the two rods (7, 8), such that when they reach the end of their travel distance on the respective inner threads (10, 11), said smooth section (17) allows them to rotate without uncoupling, such that although the palatal expander has the objective of breaking the bone area of the palate, the bone structure itself of the palate tends to compress the components thereof which exert resistance against said compression, maintaining the coupling of the components of the expanding device when said device is in its final expansion area.

In any case, the nut (9) is preferably a self-locking nut, such that, through the adjustment of one of the rods (7, 8), it can be adjusted to keep the increasingly separated positions it adopts during treatment fixed.

In another embodiment of the present invention, which can be an alternative or complementary to any of the above examples, the expanding element (2) has at the respective external ends (13, 14) of the two rods (7, 8), positioned outside the nut (9), a configuration for being attached to the securing means (3) and/or to the coupling means or personalised CAD/CAM structure (5) with an optimised geometry which allows an easy detachment or rapid detachment, namely with a non-cylindrical geometry and with a shape, for example a square shape, as shown in the example of the figures, or triangular, or hexagonal, or trilobe, or shape other than a cylindrical shape, such that it is suitable for the assembly of said means (3, 5) by means of fitting using a thread through a threaded opening (16) provided at said non-cylindrical ends (13, 14), preventing the need for welds or complex mechanisms for fixing the expanding device to the personalised sintered CAD/CAM structure with the securing means (3) and coupling means (5).

According to the above, the present invention relates to expanding devices which may comprise some or all of the following features, which are shown in combination in the figures, although they could be depicted separately:
- Two threaded rods (7, 8) having different diameters having different thread pitches,
- Out of the two threaded rods (7, 8), at least the threaded rod (8) having a smaller diameter has blocking means at one of the ends thereof, and
- A non-cylindrical configuration with a threaded opening at the outer ends of the threaded rods (7, 8).

According to the above, the expanding device (1) is installed in the palate (4), defining a prosthesis adapted for each case performed by the orthodontist, being anchored to said palate by means of temporary anchorage devices, similar to implant screws, and/or by means of grips fixed on teeth, said expanding device including an expanding element (2).

The nut (9) of the expanding element (2) is initially positioned in its non-expanded initial position, i.e., in its minimum expanding position, and is gradually activated as prescribed by the orthodontist by means of a hexagonal key that rotates the nut (9) such that, with each activation by partial rotation, the threaded rods (7, 8) and the external ends (13, 14) thereof are forced to come out on both sides which, in turn, push the fixing means (3) and/or of anchoring means (5), achieving the widening of the palatal suture.

The locking means of the rods (7, 8) prevent uncoupling at the end of the travel distance and the non-cylindrical geometry of the external ends (13, 14) of said rods (7, 8) allows the replacement of the expanding element (2) with another one having a larger dimension without the need for welding.

Lastly, the device (1) of the invention, at least in the expanding element (2) thereof, is preferably manufactured in titanium or in biocompatible metal alloys.

## Claims

1. A distraction device for palatal expansion with a central expanding element (2) having an adjustable length, **characterised in that** it comprises:
- a nut (9) with opposite sides, comprising a first side with an opening with a first inner thread (10) and a second side, opposite the first side, with an opening with a second inner thread (11) having a smaller diameter than the first inner thread (10),
- a first threaded rod (7) with a thread (7.1) with a first diameter and a cavity (12) having a smaller diameter than said first diameter, and an external end (13) on one of the sides, with the thread (7.1) being screwed onto the first inner thread (10) of the nut (9), and
- a second threaded rod (8) with a thread (8.1) with a second diameter, and an external end (14), with the thread (8.1) being screwed onto the second inner thread (11) of the nut (9), and the diameter of the thread (8.1) being smaller than the diameter of the cavity (12) of the first rod (7) for insertion into said cavity (12),
determining at least two positions, a non-expanded initial position, wherein the external end (14) of the second threaded rod (8) is in contact with the nut (9) and inserted into the cavity (12) of the first threaded rod (7), determining a minimum length (A) between the two external ends (13, 14) of the device, and an expanded final position, wherein the external end (14) of the second threaded rod (8) is separated from the nut (9) and outside the cavity (12) of the first threaded rod (7), determining a maximum length (B) between said two external ends (13, 14).

2. The device according to claim 1, **characterised in that** the thread (7.1) of the first rod (7) and the thread (8.1) of the second rod (8) have different thread pitches, said thread pitches being associated with the first inner thread (10) and the second inner thread (11) of the nut (9), respectively, which also have different thread pitches.

3. The device according to claim 1 or 2, **characterised in that** it comprises mechanical blocking means at least at the threaded end of the second rod (8) to prevent said end of the rod from coming out of the nut (9) and thereby blocking the expansion of the device when it reaches the fully extended final position, preventing unwanted uncoupling of the rods (7, 8).

4. The device according to any of the preceding claims, **characterised in that** the external ends (13, 14) of the two rods (7, 8) have a non-cylindrical geometric configuration with an opening threaded (16) to receive a personalised CAD/CAM structure with securing means (3) for securing the device to the palate or securing means (3) for securing the device to the palate together with coupling means (5) for coupling the device to teeth.

5. The device according to claim 2, **characterised in that** the first rod (7) having a larger diameter has a thread (7.1) with a thread pitch smaller than the thread (8.1) of the second rod (8).

6. The device according to claim 3, **characterised in that** the mechanical blocking means comprise a blocking element (15) positioned at the inner end of the threaded rod (8) such that when it reaches the end of its travel distance on the second inner thread (11) of the nut (9), said blocking element (15) functions as a stop at the edge of the inner thread (11), blocking the rotation of the nut (9) and of the threaded rod (7), preventing the possibility of becoming uncoupled.

7. The device according to claim 6, **characterised in that** the blocking element (15) is a rivet and/or screw and/or a welded portion.

8. The device according to claim 3, **characterised in that** the mechanical blocking means comprise a threadless smooth section (17) on each of the two rods (7, 8) such that when they reach the end of their travel distance on the respective inner threads (10, 11) of the nut (9), said smooth section (17) allows them to rotate without uncoupling.

9. The device according to claim 4, **characterised in that** the respective external ends (13, 14) of the two rods (7, 8) have a square, hexagonal, triangular, or trilobe-shaped configuration.

10. The device according to any of the preceding claims, **characterised in that** the nut (9) is a self-locking nut.

11. The device according to any of the preceding claims, **characterised in that** the components of the expanding element (2) are manufactured in titanium or in biocompatible metal alloys.
